# EUROPÄISCHE PATENTSCHRIFT

(11) **EP 3 656 096 B1**
(45) Veröffentlichungstag und Bekanntmachung des Hinweises auf die Patenterteilung: **08.09.2021**
(21) Anmeldenummer: 18743459.2
(22) Anmeldetag: 18.07.2018
(51) Int. Cl.: H04L 12/40, H03H 7/42, H03H 7/01, H04L 25/02, H04L 25/08, G06F 13/40, G06F 13/42

(54) **SENDE-/EMPFANGSEINRICHTUNG FÜR EIN CAN BUSSYSTEM UND VERFAHREN ZUR ERKENNUNG EINES KURZSCHLUSSES MIT EINER CAN SENDE-/EMPFANGSEINRICHTUNG**
TRANSCEIVER FOR A CAN BUS SYSTEM, AND METHOD FOR DETECTING A SHORT-CIRCUIT USING A CAN TRANSCEIVER
DISPOSITIF D'ENVOI ET DE RÉCEPTION POUR SYSTÈME DE BUS CAN ET PROCÉDÉ DE DÉTECTION D'UN COURT-CIRCUIT AVEC UN DISPOSITIF D'ENVOI ET DE RÉCEPTION CAN

(30) Priorität: 21.07.2017 DE 102017212544
(43) Veröffentlichungstag der Anmeldung: 27.05.2020
(73) Patentinhaber: Robert Bosch GmbH, 70442 Stuttgart (DE)
(72) Erfinder: WALKER, Steffen, 72770 Reutlingen (DE); MUTTER, Arthur, 73765 Neuhausen (DE)
(86) Internationale Anmeldenummer: PCT/EP2018/069505
(87) Internationale Veröffentlichungsnummer: WO 2019/016265

(56) Entgegenhaltungen:
- DE-A1-102008 002 946
- DE-A1-102008 052 781
- US-A- 5 267 251

## Beschreibung

Die vorliegende Erfindung betrifft eine Sende-/Empfangseinrichtung für ein CAN Bussystem und ein Verfahren zur Erkennung eines Kurzschlusses mit einer CAN Sende-/Empfangseinrichtung. Die Sende-/Empfangseinrichtung ist insbesondere in einem CAN FD Bussystem zur Erkennung von Kurzschlüssen von einzelnen Busleitungen oder Busadern eines Busses des Bussystems einsetzbar.

### Stand der Technik

Zur Nachrichten- oder Datenübertragung findet bei einigen technischen Anwendungen das CAN-Bussystem Verwendung. Beispiele hierfür sind eine Kommunikation zwischen Sensoren und Steuergeräten in einem Fahrzeug oder einer technischen Produktionsanlage, usw.. In einem solchen Bussystem werden Nachrichten mittels des CAN- und/oder CAN FD Protokolls übertragen, wie es im Standard ISO-11898-1:2015 als CAN Protokoll-Spezifikation mit CAN FD beschrieben ist. Bei einem CAN FD-Bussystem ist eine Datenübertragungsrate von größer 1 MBit pro Sekunde (1Mbps) möglich, beispielsweise von 2 Mbit/s, 5 Mbit/s, oder einer beliebigen anderen Datenübertragungsrate von größer 1 Mbit/s usw.. Zudem ist ein CAN-HS-Bussystem (HS = Hochgeschwindigkeit = Highspeed) bekannt, bei welchem eine Datenübertragungsrate von bis zu 500 kbit pro Sekunde (500 kbps) möglich ist.

Das CAN-Bussystem ist ein Kommunikationssystem, bei welchen ein Buszustand aktiv getrieben wird. Hierbei werden separat ein Signal für ein Bussignal CAN_H und ein Signal für ein Bussignal CAN_L getrieben. Zum Senden und Empfangen werden in einem CAN-Bussystem für die einzelnen Kommunikationsteilnehmer üblicherweise Sende-/Empfangseinrichtungen eingesetzt, die auch als CAN-Transceiver oder CAN FD Transceiver usw. bezeichnet werden.

Die Spannungsversorgung der Sende-/Empfangseinrichtung erfolgt über eine Spannung VCC in Höhe von 5V, die gegen Masse GND anliegt. Die Spannung VCC wird beispielsweise in einem Fahrzeug von einer Batterie geliefert, die eine Spannung Ubat aufweist, die insbesondere einen Wert von 12 V oder 14 V hat.

In einem CAN-Bussystem wird für eine Sende-/Empfangseinrichtung für Gateway-Steuergeräte eine sogenannte Diagnosefähigkeit verlangt. Demgemäß muss die Sende-/Empfangseinrichtung sowohl für CAN als auch für CAN FD folgende Fehler erkennen:
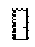 Kurzschluss der Busader für CAN_H nach Ubat
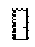 Kurzschluss der Busader für CAN_H nach VCC5V
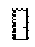 Kurzschluss der Busader für CAN_H nach GND
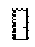 Kurzschluss der Busader für CAN_L nach Ubat
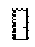 Kurzschluss der Busader für CAN_L nach VCC5V
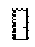 Kurzschluss der Busader für CAN_L nach GND.

Die US Patentschrift US 5,267,251 beschreibt eine Sende-/Empfangseinrichtung für einen Zweidrahtbus mit einer Kurzschlusserkennung im laufenden Betrieb.

Die Offenlegungsschrift DE 10 2008 002946 A1 beschreibt ein Verfahren zum Detektieren eines Fehlers auf einer Datenleitung in einem Bussystem in einem Zweileiterdatennetzwerk, wobei eine Mittenspannung nach einer Tiefpassfilterung direkt oder nach einer Analog-Digital-Umsetzung als Digitalwert von einem Mikrocontroller detektiert wird.

### Offenbarung der Erfindung

Daher ist es Aufgabe der vorliegenden Erfindung, eine Sende-/Empfangseinrichtung für ein CAN Bussystem und ein Verfahren zur Erkennung eines Kurzschlusses mit einer CAN Sende-/Empfangseinrichtung bereitzustellen, welche die zuvor genannten Probleme lösen.

Die Aufgabe wird durch eine Sende-/Empfangseinrichtung für ein Bussystem mit den Merkmalen von Anspruch 1 gelöst. Die Sende-/Empfangseinrichtung umfasst einen Sender zum Senden eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, und zum Senden des Sendesignals an eine zweite Busader des Busses, einen Empfänger zum Empfangen des auf den Busadern übertragenen Bussignals, und einer Diagnoseeinheit zum Erkennen eines Kurzschlusses in dem Bussystem, wobei die Diagnoseeinheit ausgestaltet ist, eine Diagnose nur in einer vorbestimmten Kommunikationsphase des Bussignals auszuführen, dadurch gekennzeichnet, dass die Diagnoseeinheit (15; 16) ausgestaltet ist, die Diagnose in einer Kommunikationsphase des Bussignals (CAN_H, CAN_L) auszuführen, in welcher die Übertragungsrate des Bussignals (CAN_H, CAN_L) geringer als in einer weiteren Kommunikationsphase des Bussignals (CAN,,H, CAN_L) ist. Mit der beschriebenen Sende-/Empfangseinrichtung kann die gewünschte Diagnosefähigkeit in Bezug auf Kurzschlüsse realisiert werden. Demzufolge kann insbesondere ein Kurzschluss der Busadern erfasst werden, wie beispielsweise von CAN_H nach Ubat und/oder von CAN_H nach VCC5V und/oder von CAN_H nach GND und/oder von CAN_L nach Ubat und/oder von CAN_L nach VCC5V und/oder von CAN_L nach GND sicher erkannt werden.

Vorteilhaft an der Sende-/Empfangseinrichtung ist zudem, dass ein etwaiger Kurzschluss im Betrieb der Sende-/Empfangseinrichtung erkannt werden kann. Hierbei wird der Betrieb der Sende-/Empfangseinrichtung durch die durchgeführte Diagnose nicht gestört.

Vorteilhafte weitere Ausgestaltungen der Sende-/Empfangseinrichtung sind in den abhängigen Ansprüchen beschrieben.

Möglicherweise ist die Diagnoseeinheit ausgestaltet, eine Diagnose in einer Kommunikationsphase des Bussignals auszuführen, in welcher die Übertragungsrate des Bussignals gleich oder kleiner als 500 kbit/s ist, wenn der Sende-/Empfangseinrichtung eine Gleichtaktdrossel mit einer Induktivität von 100 µH vorgeschaltet ist.

Gemäß einem Ausführungsbeispiel ist die Diagnoseeinheit ausgestaltet, eine Diagnose in einer Arbitrationsphase auszuführen, bei welcher bestimmt wird, welche der Teilnehmerstationen als nächstes zeitweise den exklusiven, kollisionsfreien Zugriff auf den Bus des Bussystems bekommt.

Gemäß einer weiteren Variante kann die Diagnoseeinheit ausgestaltet sein, eine Diagnose in Bezug auf eine vorbestimmte Bitabfolge auszuführen. Hierbei bestimmt die vorbestimmte Bitabfolge beispielsweise das Ende einer über den Bus zu übertragenden Nachricht. Zudem kann die Diagnoseeinheit ausgestaltet sein, eine Diagnose nur in Bezug auf einen Teil der vorbestimmten Bitabfolge auszuführen. Denkbar ist auch, dass die vorbestimmte Bitabfolge in einer Kommunikationsphase gesendet wird, in welcher mehrere Teilnehmerstationen gleichzeitig senden.

In einer speziellen Ausgestaltung kann der Empfänger einen Empfangskomparator zum Empfangen der Bussignale aufweisen, wobei ein Kommunikationsphasen-Erfassungsblock parallel zu den Eingängen des Empfangskomparators geschaltet ist, und wobei der Kommunikationsphasen-Erfassungsblock zum Erfassen der derzeitigen Kommunikationsphase des Bussignals ausgestaltet ist, und wobei die Diagnoseeinheit ausgestaltet ist, ihre Diagnose in Abhängigkeit von dem Erfassungsergebnis des Kommunikationsphasen-Erfassungsblocks zu aktivieren oder zu deaktivieren.

Die zuvor beschriebene Sende-/Empfangseinrichtung kann Teil eines Bussystems sein, das einen Bus, und mindestens zwei Teilnehmerstationen aufweist, welche über den Bus derart miteinander verbunden sind, dass sie miteinander kommunizieren können. Hierbei weist mindestens eine der mindestens zwei Teilnehmerstationen eine zuvor beschriebene Sende-/Empfangseinrichtung auf.

Die zuvor genannte Aufgabe wird zudem durch ein Verfahren zur Erkennung eines Kurzschlusses mit einer CAN Sende-/Empfangseinrichtung mit den Merkmalen von Anspruch 10 gelöst. Das Verfahren wird mit einer Sende-/Empfangseinrichtung für ein Bussystem ausgeführt, bei welchem zumindest zeitweise ein exklusiver, kollisionsfreier Zugriff einer Teilnehmerstation auf einen Bus des Bussystems gewährleistet ist. Hierbei weist die Sende-/Empfangseinrichtung einen Sender, einen Empfänger und eine Diagnoseeinheit auf, wobei das Verfahren die Schritte aufweist: Senden, mit dem Sender, eines Sendesignals an eine erste Busader des Busses, Senden des Sendesignals an eine zweite Busader des Busses, Empfangen, mit dem Empfänger, des auf den Busadern übertragenen Bussignals, und Ausführen einer Diagnose, mit der Diagnoseeinheit, nur in einer vorbestimmten Kommunikationsphase des Bussignals, um einen Kurzschluss in dem Bussystem zu erkennen, dadurch gekennzeichnet, dass die Diagnose in einer Kommunikationsphase des Bussignals (CAN_H, CAN_L) ausgeführt wird, in welcher die Übertragungsrate des Bussignals (CAN_H, CAN_L) geringer als in einerweiteren Kommunikationsphase des Bussignals (CAN_H, CAN_L) ist. Das Verfahren bietet dieselben Vorteile, wie sie zuvor in Bezug auf die Sende-/Empfangseinrichtung genannt sind.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaltbild einer ersten Sende-/Empfangseinrichtung in dem Bussystem gemäß dem ersten Ausführungsbeispiel;
Fig. 3 ein Schaubild zur Veranschaulichung des Aufbaus einer Nachricht, die von einer Teilnehmerstation des Bussystems gemäß dem ersten Ausführungsbeispiel gesendet wird; und
Fig. 4 ein Schaltbild einer zweiten Sende-/Empfangseinrichtung in dem Bussystem gemäß dem ersten Ausführungsbeispiel.
In den Figuren sind gleiche oder funktionsgleiche Elemente, sofern nichts anderes angegeben ist, mit denselben Bezugszeichen versehen.

### Beschreibung der Ausführungsbeispiele

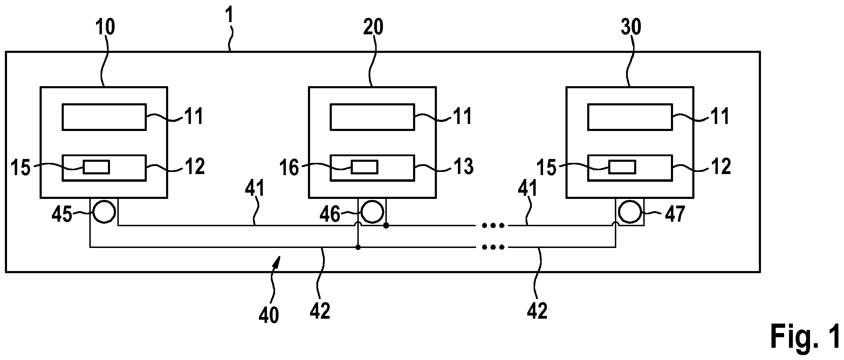

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtungen 12 umfassen jeweils eine Diagnoseeinheit 15. Die Teilnehmerstation 20 hat dagegen eine Kommunikationssteuereinrichtung 11 und eine Sende-/Empfangseinrichtung 13. Die Sende-/Empfangseinrichtung 13 umfasst eine Diagnoseeinheit 16. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden und Empfangen der Nachrichten 45, 47 in Form von Signalen und nutzt hierbei die Diagnoseeinheit 15, wie später noch ausführlicher beschrieben. Die Kommunikationssteuereinrichtung 11 kann insbesondere wie ein herkömmlicher CAN-FD-Controller und/oder CAN-Controller ausgeführt sein. Die Sende-/Empfangseinrichtung 12 kann insbesondere wie ein herkömmlicher CAN-Transceiver und/oder CAN-FD-Transceiver ausgeführt sein. Die Sende-/Empfangseinrichtung 13 dient zum Senden und Empfangen der Nachrichten 46 in Form von Signalen und nutzt hierbei die Diagnoseeinheit 16, wie später noch ausführlicher beschrieben. Ansonsten kann die Sende-/Empfangseinrichtung 13 wie ein herkömmlicher CAN-Transceiver ausgeführt sein.

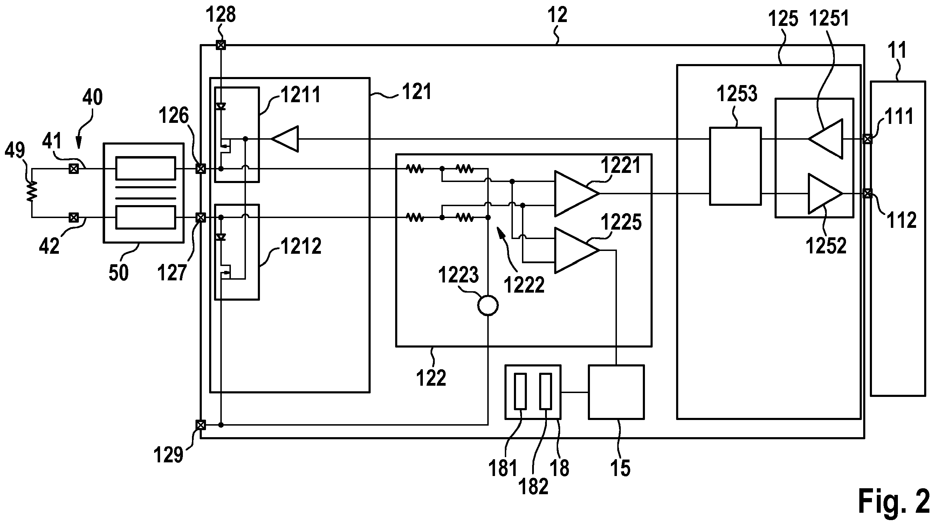

Fig. 2 zeigt den grundlegenden Aufbau der Sende-/Empfangseinrichtung 12 mit der Diagnoseeinheit 15 und einer Speichereinheit 18. Die Sende-/Empfangseinrichtung 12 ist an Anschlüssen 126, 127 an den Bus 40, genauer gesagt dessen erste Busader 41 für CAN_H und dessen zweite Busader 42 für CAN_L, über eine Gleichtaktdrossel 50 angeschlossen. Die Gleichtaktdrossel 50 hat eine Induktivität von beispielsweise 100µH. An der Sende-/Empfangseinrichtung 12 erfolgt die Spannungsversorgung, insbesondere CAN-Supply, für die erste und zweite Busader 41, 42 über einen Anschluss 128. Die Verbindung der Sende-/Empfangseinrichtung 12 mit Masse bzw. CAN_GND ist über einen Anschluss 129 realisiert. Zur Terminierung der ersten und zweiten Busader 41, 42 ist bei dem gezeigten Beispiel ein Abschlusswiderstand 49 vorgesehen.

Die erste und zweite Busader 41, 42 sind bei der Sende-/Empfangseinrichtung 12 mit einem Sender 121, der auch als Transmitter bezeichnet wird, und mit einem Empfänger 122 verbunden, der auch als Receiver bezeichnet wird. Sowohl mit dem Sender 121 als auch dem Empfänger 122 ist eine Anschalteinheit 125 zum Treiben von Signalen über die Anschlüsse 111, 112 an die Kommunikationssteuereinrichtung 11 verbunden.

Zum Treiben der Signale der Anschlüsse 111, 112 hat die Anschalteinheit 125 einen Sendesignaltreiber 1251 für ein Sendesignal TxD, das auch als TxD-Signal bezeichnet wird und an dem Anschluss 111 von der Kommunikationssteuereinrichtung 11 empfangen wird. Zudem hat die Anschalteinheit 125 einen Empfangssignaltreiber 1252 für ein Empfangssignal RxD, das auch als RxD-Signal bezeichnet wird. Das Empfangssignal RxD wurde von den Busadern 41, 42 mittels des Empfängers 122 empfangen und wird über den Anschluss 112 an die Kommunikationssteuereinrichtung 11 weitergegeben. Die Treiber 1251, 1252 sind über ein Digitalteil 1253 mit dem Sender 121 und dem Empfänger 122 verbunden. Das Digitalteil 1253 kann eine Überwachung der Signale TxD, RxD durchführen.

Gemäß Fig. 2 hat der Sender 121 einen herkömmlichen Treiber 1211 für das Signal CAN_H für die erste Busader 41 und einen herkömmlichen Treiber 1212 für das Signal für CAN_L für die zweite Busader 42.

Der Empfänger 122 hat einen Empfangskomparator 1221, dessen Eingänge in einem resistiven, insbesondere symmetrischen, Spannungsteiler 1222, genauer gesagt dessen Mittelabgriff, verschaltet sind, eine Busvorspannungseinheit 1223 und einen Kommunikationsphasen-Erfassungsblock 1225. Die Busvorspannungseinheit 1223 speist den resistiven Spannungsteiler 1222 an seinem einen Ende mit einer vorbestimmten Busvorspannung oder einem vorbestimmten Busvorspannungspotenzial. Der resistive Spannungsteiler 1222 ist an seinem anderen Ende an die erste und zweite Busader 41, 42 angeschlossen. Die Eingänge des Empfangskomparators 1221 sind parallel zu den Eingängen des Kommunikationsphasen-Erfassungsblocks 1225 geschaltet. Der Kommunikationsphasen-Erfassungsblock 1225 kann, wie bei dem Beispiel von Fig. 2 gezeigt, einen Differenzverstärker aufweisen, dessen Eingänge parallel zu den Eingängen des Empfangskomparators 1221 geschaltet sind.

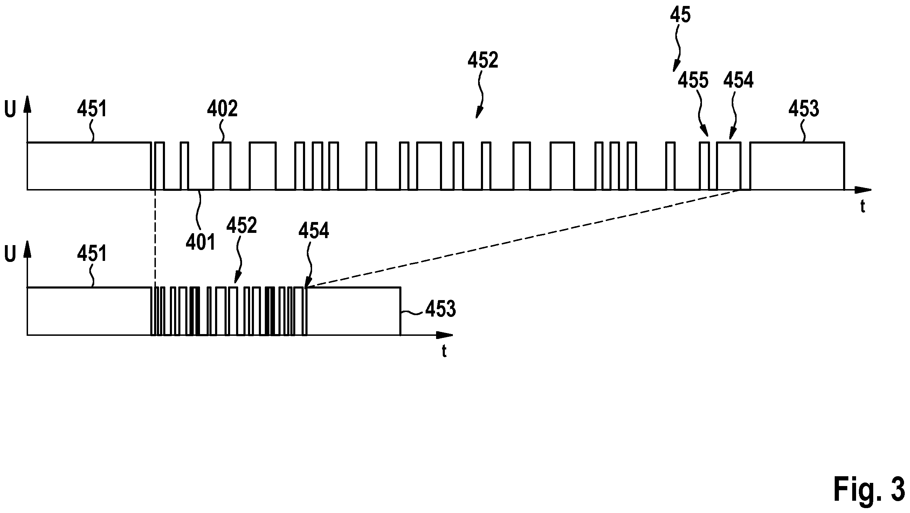

Der Kommunikationsphasen-Erfassungsblock 153 kann die unterschiedlichen Phasen einer Kommunikation auf dem Bus 40 erfassen und erkennen oder unterscheiden, die nachfolgend in Bezug auf Fig. 3 erläutert sind.

Die Diagnoseeinheit 15 diagnostiziert oder prüft in Abhängigkeit von dem Erfassungsergebnis des Kommunikationsphasen-Erfassungsblocks 1225, ob ein Kurzschluss auf den Busadern 41, 42 vorliegt oder nicht. Hierbei führt die Diagnoseeinheit 15 ihre Diagnose nur durch, wenn eine vorbestimmte Phase der Kommunikation vorliegt. In anderen Worten, die Diagnoseeinheit 15 ist ausgestaltet, ihre Diagnose in Abhängigkeit von dem Erfassungsergebnis des Kommunikationsphasen-Erfassungsblocks 1225 zu aktivieren oder zu deaktivieren.

Das Ergebnis der Erfassung mit der Diagnoseeinheit 15 wird in die Speichereinheit 18 in Register 181, 182 geschrieben. Die Register 181, 182 sind bei Bedarf auslesbar, so dass bei einer Erfassung eines Kurzschlusses beispielsweise eine Warnmeldung ausgegeben werden kann.

Gemäß Fig. 3 werden die in einer Nachricht 45, wie auch den Nachrichten 46, 47, zu übertragenden Informationen bzw. Daten in Bytes bzw. Bits gespeichert, die zwei unterschiedliche Bitzustände oder Spannungszustände annehmen können. Die unterschiedlichen Bitzustände eines Sendesignals TxD haben beim Übertragen der Nachricht 45, 46, 47 über den Bus 40 unterschiedliche Buszustände 401, 402 zur Folge. Bei dem gezeigten Beispiel entspricht der erste Buszustand 401 einem dominanten Buszustand. Der zweite Buszustand 402 entspricht einem rezessiven Buszustand.

Fig. 3 zeigt in ihrem oberen Teil anhand der Nachricht 45 einen CAN-Rahmen, wie er von der Sende-/Empfangseinrichtung 12 oder der Sende-/Empfangseinrichtung 13 gesendet wird. In dem unteren Teil von Fig. 3 ist ein CAN-FD-Rahmen gezeigt, wie er alternativ von der Sende-/Empfangseinrichtung 12 gesendet werden kann.

Der CAN-Rahmen und der CAN-FD-Rahmen sind für die CAN-Kommunikation auf dem Bus 40 grundlegend in zwei unterschiedliche Kommunikationsphasen unterteilt, nämlich die Arbitrationsphasen 451, 453 und einen Datenbereich 452, der bei CAN-HS auch Datenfeld bzw. bei CAN-FD auch Datenphase genannt wird. Der Datenbereich 452 ist an seinem Ende mit mindestens einem Endebit 454 abgeschlossen, das auch EOF genannt wird, wobei EOF für End of Frame bzw. Ende der Nachricht steht. Bei CAN oder CAN FD ist das EOF eine Bitabfolge aus 11 rezessiven Bits, also Bits mit dem zweiten Buszustand 402. Dem mindestens einen Endebit 454 geht eine Acknowledge-Phase 455 voraus.

Bei CAN-FD wird im Vergleich zum klassischen CAN am Ende der Arbitrationsphase 451 die Bitrate für die folgende Datenphase auf z. B. 2, 4, 8Mbps erhöht. Damit gilt, dass bei CAN-FD die Bitrate in den Arbitrationsphasen 451, 453 kleiner als die Bitrate im Datenbereich 452 ist. Bei CAN-FD ist der Datenbereich 452 gegenüber dem Datenbereich 452 des CAN-Rahmens deutlich verkürzt.

Die Arbitrationsphasen 451, 453 dienen bei einem CAN-Rahmen und einem CAN-FD-Rahmens dazu zu entscheiden, welcher Knoten bzw. welche Teilnehmerstation 10, 20, 30 des Bussystems 1 die wichtigste Nachricht 45, 46, 47 trägt. Die Teilnehmerstation 10, 20, 30 mit der wichtigsten Nachricht 45, 46, 47 gewinnt die Arbitration und darf daher die Nachricht nach Abschluss der Arbitrationsphase senden. Alle anderen Teilnehmerstationen sind dann beim Übertragen dieser wichtigsten Nachricht Zuhörer. Hierbei treiben die Sende-/Empfangseinrichtungen 12, 13 den Bus 40 niederohmig, um einen dominanten Buszustand 402 oder Bitzustand als einen der beiden verschiedenen Buszustände 401, 402 oder Bitzustände herzustellen. Im Rezessivzustand als dem anderen der beiden verschiedenen Buszustände 401, 402 dagegen sind die Sende-/Empfangseinrichtungen 12, 13 verhältnismäßig hochohmig. Der Kommunikationsphasen-Erfassungsblock 1225 von Fig. 2 kann insbesondere die Arbitrationsphasen 451, 453, den Datenbereich 452 sowie das Ende des Datenbereichs 453, also das mindestens eine Endebit (EOF) 454 erkennen.

Somit kann die Funktionalität der Diagnoseeinheit 15 nur für Kommunikationsphasen genutzt werden, in welchen die Datenübertragungsrate in einem CAN Rahmen oder CAN FD Rahmen geringer als in anderen Kommunikationsphasen ist. Dadurch wird die Diagnose der Diagnoseeinheit 15 in den langsameren Phasen der Kommunikation im Bussystem 1 durchgeführt. Solche Kommunikationsphasen mit geringerer Übertragungsrate sind bei einer Gleichtaktdrossel 50 mit einer Induktivität von 100µH gleich oder kleiner als insbesondere 500 kbit/s. Bei 500 kbit/s dauert ein Bit 2µs. Insbesondere ist eine solche Kommunikationsphase in einem CAN Rahmen oder CAN FD Rahmen die Arbitrationsphase 451, 453.

Hat die Gleichtaktdrossel 50 eine kleinere Induktivität als 100µH, wäre die Diagnose der Diagnoseeinheit 15 bei einer Übertragungsrate von größer oder gleich 500 kbit/s. ausführbar. Umgekehrt gilt, dass die Diagnose der Diagnoseeinheit 15 bei höheren Induktionswerten 100µH der Gleichtaktdrossel 50 bei einer kleineren Übertragungsrate als 500 kbit/s auszuführen ist.
Bei dem vorliegenden Ausführungsbeispiel führt die Diagnoseeinheit 15 eine Diagnose nur in den Arbitrationsphasen 451, 453 aus.

Dadurch wird gewährleistet, dass die Sende-/Empfangseinrichtung 12 Kurzschlüsse sicher erfassen kann. Dies gilt auch, wenn die Sende-/Empfangseinrichtung 12 nach einem Übergang von Rezessiv nach Dominant bzw. vom zweiten Buszustand 402 zum ersten Buszustand 401 entkoppelt durch die Drossel 50 für eine Zeit von etwa 1µs einen dominanten Zustand schaffen sollte. Während eines solchen Zeitfensters kann in dem genannten Fall ein Kurzschluss auf der Busseite nicht erkannt werden. Die Diagnoseeinheit 15 ist daher derart ausgelegt, dass eine Zeit deutlich über 1µs nach einem Übergang von Rezessiv nach Dominant abgewartet wird, bevor die Busspannungen CAN_H, CAN_L und/oder deren Differenzspannung VDIFF für eine Diagnose erfasst werden. Die genannte Zeit stellt sicher, dass für eine Wartezeit gewartet wird, bis die Schwingungen abgeklungen sind, die sich nach einem Übergang von Rezessiv nach Dominant bzw. vom zweiten Buszustand 402 zum ersten Buszustand 401 in den Busspannungen CAN_H, CAN_L einstellen. Die Schwingungen entstehen durch die Gleichtaktdrossel 50 und parasitären Kapazitäten. Die genannte Wartezeit ergibt für die Diagnose der Diagnoseeinheit 15 ein Zeitfenster, das unabhängig von der Bitrate in dem CAN Rahmen oder CAN FD Rahmen ist. Jedoch ist das Zeitfenster durch die Sendepegel der Sende-/Empfangseinrichtung 12 und die Zeitkonstante der Gleichtaktdrossel 50 bestimmt.

In einer Modifikation der Sende-/Empfangseinrichtung 12 wird die Bewertung, ob ein Kurzschluss vorliegt oder nicht, nur aufgrund von dominanten Zuständen, also ersten Buszuständen 401 durchgeführt. Die dominanten Zustände können in den Arbitrationsphasen 451, 453 im Vergleich zu Kurzschlüssen erkannt werden.

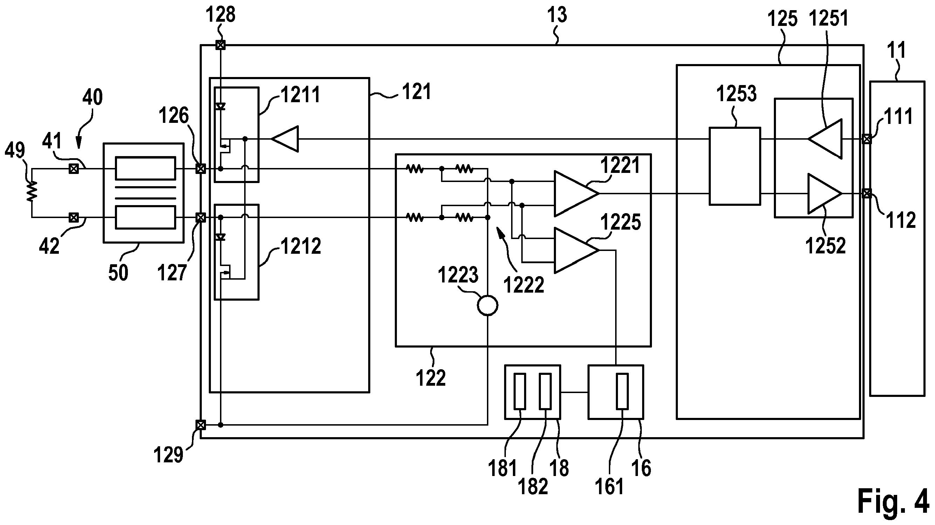

Gemäß Fig. 4 ist die Sende-/Empfangseinrichtung 13 weitestgehend auf die gleiche Weise ausgeführt wie die Sende-/Empfangseinrichtung 12. Die Sende-/Empfangseinrichtung 13 hat jedoch anstelle der Diagnoseeinheit 15 die Diagnoseeinheit 16.

Die Diagnoseeinheit 16 ist beispielsweise ausgestaltet, die Diagnose in Bezug einen möglicherweise vorhandenen Kurzschluss nur anhand von rezessiven Zuständen eines CAN-Rahmens bzw. einer Nachricht 46 bzw. anhand von Bits mit dem zweiten Buszustand 402 auszuführen. Hierbei kann die Diagnoseeinheit 16 insbesondere das mindestens eine Endebit (EOF) 454 prüfen, um zu entscheiden ob ein Kurzschluss vorliegt oder nicht.

Für das mindestens eine Endebit (EOF) 454 kann insbesondere bei der Diagnoseeinheit 16 ein Filterelement 161 vorgesehen sein, das 6 bis 11 aufeinanderfolgende rezessive Bits bzw. Bits mit dem zweiten Buszustand 402 erkennt. Insofern bietet das mindestens eine Endebit (EOF) 454 ein vergleichsweise langes Zeitfenster, um die Diagnose im rezessiven Zustand durchzuführen. Damit ist die Diagnoseeinheit 16 ausgestaltet, eine Diagnose nur in Bezug auf einen Teil der vorbestimmten Bitabfolge des mindestens einen Endebits (EOF) 454 auszuführen.

Dadurch bietet auch die Diagnoseeinheit 16 eine sichere Erfassung von Kurzschlüssen der Busadern 41, 42.

In einer Modifikation der Sende-/Empfangseinrichtung 12 oder der Sende-/Empfangseinrichtung 13 wird die Bewertung, ob ein Kurzschluss vorliegt oder nicht, aufgrund von dominanten und rezessiven Zuständen durchgeführt. Die dominanten Zustände werden hierbei insbesondere in der Arbitrationsphase 451, 153 bewertet.

Gemäß einer weiteren Modifikation kann auch die Sende-/Empfangseinrichtung 12 ein Filterelement 161 aufweisen, um eine Diagnose nur in Bezug auf einen Teil einer vorbestimmten Bitabfolge auszuführen.

Mit den Diagnoseeinheiten 15, 16 wird somit jeweils ein Verfahren zur Erkennung eines Kurzschlusses mit der jeweiligen Sende-/Empfangseinrichtung 12, 13 ausgeführt.

Gemäß einem zweiten Ausführungsbeispiel wird mit der Sende-/Empfangseinrichtung 13, genauer gesagt deren Diagnoseeinheit 16, die Bewertung, ob ein Kurzschluss vorliegt oder nicht, anhand des mindestens einen Endebits (EOF) 454 und anhand der Acknowledge-Phase 455 des CAN-Rahmens gemäß Fig. 3 bzw. einer Nachricht 46 durchgeführt. In der Acknowledge-Phase 455, die in dem CAN-Rahmen die zwei Bits vor dem mindestens einen Endebit (EOF) 454 umfasst, senden mehrere Sende-/Empfangseinrichtungen 12, 13 gleichzeitig. Im Fall von niederohmigen Kurzschlüssen wären die Diagnoseergebnisse aufgrund der Acknowledge-Phase 455 gleich dem Diagnoseergebnis während eines Dominant-Bits ohne Acknowledge. Ansonsten müssen hier grundsätzlich andere Spannungspegel bzw. Buszustände auftreten.

Die Diagnoseeinheit 16 gemäß dem zweiten Ausführungsbeispiel erzielt die gleichen Vorteile, wie in Bezug auf die Diagnoseeinheiten 15, 16 gemäß dem ersten Ausführungsbeispiel genannt.

Alle zuvor beschriebenen Ausgestaltungen der Diagnoseeinheiten 15, 16, der Sende-/Empfangseinrichtungen 12, 13, der Teilnehmerstationen 10, 20, 30, des Bussystems 1 und des darin ausgeführten Verfahrens gemäß dem ersten und zweiten Ausführungsbeispiel und deren Modifikationen können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem CAN-Protokoll basierenden Bussystems beschrieben. Das Bussystem 1 gemäß dem ersten und/oder zweiten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1 gemäß dem ersten und/oder zweiten Ausführungsbeispiel und deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch auch ein anderes serielles Kommunikationssetzwerk sein.

Die Anzahl und Anordnung der Teilnehmerstationen 10, 20, 30 in dem Bussystem 1 gemäß dem ersten und zweiten Ausführungsbeispiel und deren Modifikationen ist beliebig. Insbesondere können auch nur Teilnehmerstationen 10 oder Teilnehmerstationen 20 oder Teilnehmerstationen 30 in den Bussystemen 1 des ersten oder zweiten Ausführungsbeispiels vorhanden sein. Unabhängig davon können auch nur Diagnoseeinheiten 15 oder nur Diagnoseeinheiten 16 gemäß den verschiedenen zuvor beschriebenen Ausgestaltungsvarianten vorhanden sein.

Die Funktionalität der zuvor beschriebenen Ausführungsbeispiele lässt sich in einem Transceiver bzw. einer Sende-/Empfangseinrichtung 12, 13 bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Sende-/Empfangseinrichtung (12; 13) für ein CAN-Bussystem (1), mit einem Sender (121) zum Senden eines Sendesignals (TxD) an eine erste Busader (41) eines Busses (40) des Bussystems (1), bei weichem Bussystem (1) zumindest zeitweise ein exklusiver, kollisionsfreier Zugriff einer Teilnehmerstation (10, 20, 30) auf den Bus (40) des Bussystems (1) gewährleistet ist, und zum Senden des Sendesignals (TxD) an eine zweite Busader (42) des Busses (40),
einem Empfänger zum Empfangen des auf den Busadern (41, 42) übertragenen Bussignals (CAN_H, CAN_L), und
einer Diagnoseeinheit (15; 16) zum Erkennen eines Kurzschlusses in dem Bussystem (1),
wobei die Diagnoseeinheit (15; 16) ausgestaltet ist, eine Diagnose nur in einer vorbestimmten Kommunikationsphase des Bussignals (CAN_H, CAN_L) auszuführen,
**dadurch gekennzeichnet, dass** die Diagnoseeinheit (15; 16) ausgestaltet ist, die Diagnose in einer Kommunikationsphase des Bussignals (CAN_H, CAN_L) auszuführen, in welcher die Übertragungsrate des Bussignals (CAN_H, CAN_L) geringer als in einer weiteren Kommunikationsphase des Bussignals (CAN_H, CAN_L) ist.

2. Sende-/Empfangseinrichtung (12; 13) nach Anspruch 1, wobei die Diagnoseeinheit (15; 16) ausgestaltet ist, eine Diagnose in einer Kommunikationsphase des Bussignals (CAN_H, CAN_L) auszuführen, in welcher die Übertragungsrate des Bussignals (CAN_H, CAN_L) gleich oder kleiner als 500 kbit/s ist, wenn der Sende-/Empfangseinrichtung (12; 13) eine Gleichtaktdrossel (50) mit einer Induktivität von 100 µH vorgeschaltet ist.

3. Sende-/Empfangseinrichtung (12) nach Anspruch 1 oder 2, wobei die Diagnoseeinheit (15; 16) ausgestaltet ist, eine Diagnose in einer Arbitrationsphase (451; 453) auszuführen, bei weicher bestimmt wird, welche der Teilnehmerstationen (10, 20, 30) als nächstes zeitweise den exklusiven, kollisionsfreien Zugriff auf den Bus (40) des Bussystems (1) bekommt.

4. Sende-/Empfangseinrichtung (12; 13) nach einem der vorangehenden Ansprüche, wobei die Diagnoseeinheit (15; 16) ausgestaltet ist, eine Diagnose in Bezug auf eine vorbestimmte Bitabfolge auszuführen.

5. Sende-/Empfangseinrichtung (13) nach Anspruch 4, wobei die vorbestimmte Bitabfolge das Ende einer über den Bus (40) zu übertragenden Nachricht (45, 47; 46) bestimmt.

6. Sende-/Empfangseinrichtung (12; 13) nach Anspruch 4 oder 5, wobei die Diagnoseeinheit (15; 16) ausgestaltet ist, eine Diagnose nur in Bezug auf einen Teil der vorbestimmten Bitabfolge auszuführen.

7. Sende-/Empfangseinrichtung (13) nach einem der Ansprüche 4 bis 6, wobei die vorbestimmte Bitabfolge in einer Kommunikationsphase gesendet wird, in welcher mehrere Teilnehmerstationen (10, 20, 30) gleichzeitig senden.

8. Sende-/Empfangseinrichtung (12; 13) nach einem der vorangehenden Ansprüche,
wobei der Empfänger (122) einen Empfangskomparator (1221) zum Empfangen der Bussignale (CAN_H, CAN_L) aufweist,
wobei ein Kommunikationsphasen-Erfassungsblock (1225) parallel zu den Eingängen des Empfangskomparators (1221) geschaltet ist, und
wobei der Kommunikationsphasen-Erfassungsblock (1225) zum Erfassen der derzeitigen Kommunikationsphase des Bussignals (CAN_H, CAN_L) ausgestaltet ist, und
wobei die Diagnoseeinheit (15, 16) ausgestaltet ist, ihre Diagnose in Abhängigkeit von dem Erfassungsergebnis des Kommunikationsphasen-Erfassungsblocks (1225) zu aktivieren oder zu deaktivieren.

9. Bussystem (1), mit
einem Bus (40), und
mindestens zwei Teilnehmerstationen (10; 20; 30), welche über den Bus (40) derart miteinander verbunden sind, dass sie miteinander kommunizieren können,
wobei mindestens eine der mindestens zwei Teilnehmerstationen (10; 20; 30) eine Sende-/Empfangseinrichtung (12) nach einem der vorangehenden Ansprüche aufweist.

10. Verfahren zur Erkennung eines Kurzschlusses mit einer CAN Sende-/Empfangseinrichtung (12; 13), wobei das Verfahren mit einer Sende-/Empfangseinrichtung (12; 13) für ein Bussystem (1) ausgeführt wird, bei welchem zumindest zeitweise ein exklusiver, kollisionsfreier Zugriff einer Teilnehmerstation (10, 20, 30) auf einen Bus (40) des Bussystems (1) gewährleistet ist, wobei die Sende-/Empfangseinrichtung (12; 13) einen Sender (121), einen Empfänger (122) und eine Diagnoseeinheit (15; 16) aufweist, wobei das Verfahren die Schritte aufweist,
Senden, mit dem Sender (121), eines Sendesignals (TxD) an eine erste Busader (41) des Busses (40),
Senden des Sendesignals (TxD) an eine zweite Busader (42) des Busses (40),
Empfangen, mit dem Empfänger (122), des auf den Busadern (41, 42) übertragenen Bussignals (CAN_H, CAN_L), und
Ausführen einer Diagnose, mit der Diagnoseeinheit (15; 16), nur in einer vorbestimmten Kommunikationsphase des Bussignals (CAN_H, CAN_L), um einen Kurzschluss in dem Bussystem (1) zu erkennen,
**dadurch gekennzeichnet, dass** die Diagnose in einer Kommunikationsphase des Bussignals (CAN_H, CAN_L) ausgeführt wird, in welcher die Übertragungsrate des Bussignals (CAN_H, CAN_L) geringer als in einer weiteren Kommunikationsphase des Bussignals (CAN_H, CAN_L) ist.

## Claims

1. Transmission/reception device (12; 13) for a CAN bus system (1), having
a transmitter (121) for transmitting a transmission signal (TxD) to a first bus wire (41) of a bus (40) of the bus system (1), which bus system (1) exhibits at least temporarily ensured exclusive collision-free access by a subscriber station (10, 20, 30) to the bus (40) of the bus system (1), and for transmitting the transmission signal (TxD) to a second bus wire (42) of the bus (40),
a receiver for receiving the bus signal (CAN_H, CAN_L) transmitted on the bus wires (41, 42), and
a diagnosis unit (15; 16) for identifying a short circuit in the bus system (1),
wherein the diagnosis unit (15; 16) is configured to perform a diagnosis only in a predetermined communication phase of the bus signal (CAN_H, CAN_L),
**characterized in that** the diagnosis unit (15; 16) is configured to perform the diagnosis in a communication phase of the bus signal (CAN_H, CAN_L) in which the transmission rate of the bus signal (CAN_H, CAN_L) is lower than in another communication phase of the bus signal (CAN_H, CAN_L).

2. Transmission/reception device (12; 13) according to Claim 1, wherein the diagnosis unit (15; 16) is configured to perform a diagnosis in a communication phase of the bus signal (CAN_H, CAN_L) in which the transmission rate of the bus signal (CAN_H, CAN L) is lower than or equal to 500 kbit/s if a common-mode choke (50) with an inductance of 100 µH is connected upstream of the transmission/reception device (12; 13).

3. Transmission/reception device (12) according to Claim 1 or 2, wherein the diagnosis unit (15; 16) is configured to perform a diagnosis in an arbitration phase (451; 453), in which it is determined which of the subscriber stations (10, 20, 30) will next temporarily obtain the exclusive collision-free access to the bus (40) of the bus system (1).

4. Transmission/reception device (12; 13) according to one of the preceding claims, wherein the diagnosis unit (15; 16) is configured to perform a diagnosis in relation to a predetermined bit sequence.

5. Transmission/reception device (13) according to Claim 4, wherein the predetermined bit sequence defines the end of a message (45, 47; 46) to be transmitted via the bus (40).

6. Transmission/reception device (12; 13) according to Claim 4 or 5, wherein the diagnosis unit (15; 16) is configured to perform a diagnosis only in relation to a portion of the predetermined bit sequence.

7. Transmission/reception device (13) according to one of Claims 4 to 6, wherein the predetermined bit sequence is transmitted in a communication phase in which a plurality of subscriber stations (10, 20, 30) transmit simultaneously.

8. Transmission/reception device (12; 13) according to one of the preceding claims,
wherein the receiver (122) has a reception comparator (1221) for receiving the bus signals (CAN_H, CAN_L), wherein a communication phase detection block (1225) is connected in parallel with the inputs of the reception comparator (1221), and
wherein the communication phase detection block (1225) is configured to detect the current communication phase of the bus signal (CAN_H, CAN_L), and
wherein the diagnosis unit (15, 16) is configured to activate or deactivate its diagnosis depending on the detection result of the communication phase detection block (1225).

9. Bus system (1), having
a bus (40), and
at least two subscriber stations (10; 20; 30) that are connected to one another via the bus (40) such that they can communicate with one another,
wherein at least one of the at least two subscriber stations (10; 20; 30) has a transmission/reception device (12) according to one of the preceding claims.

10. Method for identifying a short circuit using a CAN transmission/reception device (12; 13), wherein the method is performed using a transmission/reception device (12; 13) for a bus system (1), which bus system exhibits at least temporarily ensured exclusive collision-free access by a subscriber station (10, 20, 30) to a bus (40) of the bus system (1), wherein the transmission/reception device (12; 13) has a transmitter (121), a receiver (122) and a diagnosis unit (15; 16), wherein the method comprises the steps of
transmitting, using the transmitter (121), a transmission signal (TxD) to a first bus wire (41) of the bus (40), transmitting the transmission signal (TxD) to a second bus wire (42) of the bus (40),
receiving, using the receiver (122), the bus signal (CAN_H, CAN_L) transmitted on the bus wires (41, 42), and performing a diagnosis, using the diagnosis unit (15; 16), only in a predetermined communication phase of the bus signal (CAN_H, CAN_L), in order to identify a short circuit in the bus system (1),
**characterized in that** the diagnosis is performed in a communication phase of the bus signal (CAN_H, CAN_L) in which the transmission rate of the bus signal (CAN_H, CAN_L) is lower than in another communication phase of the bus signal (CAN_H, CAN_L).

## Revendications

1. Dispositif d'émission/réception (12 ; 13) pour un système de bus CAN (1), comprenant
un émetteur (121) pour émettre un signal d'émission (TxD) à un premier fil de bus (41) d'un bus (40) du système de bus (1), dans lequel système de bus (1) un accès exclusif sans collision d'un poste d'utilisateur (10, 20, 30) au bus (40) du système de bus (1) est assuré au moins temporairement, et pour émettre le signal d'émission (TxD) à un deuxième fil de bus (42) du bus (40),
un récepteur pour recevoir le signal de bus (CAN_H, CAN_L) transmis sur les fils de bus (41, 42), et
une unité de diagnostic (15 ; 16) pour identifier un court-circuit dans le système de bus (1),
l'unité de diagnostic (15 ; 16) étant configurée pour effectuer un diagnostic uniquement dans une phase de communication prédéterminée du signal de bus (CAN_H, CAN_L),
**caractérisé en ce que** l'unité de diagnostic (15 ; 16) est configurée pour effectuer le diagnostic dans une phase de communication du signal de bus (CAN_H, CAN_L) dans laquelle le taux de transmission du signal de bus (CAN_H, CAN_L) est inférieur à celui dans une autre phase de communication du signal de bus (CAN_H, CAN_L).

2. Dispositif d'émission/réception (12 ; 13) selon la revendication 1, dans lequel l'unité de diagnostic (15 ; 16) est configurée pour effectuer un diagnostic dans une phase de communication du signal de bus (CAN_H, CAN_L) dans laquelle le taux de transmission du signal de bus (CAN_H, CAN_L) est égal ou inférieur à 500 kbit/s si une self de mode commun (50) ayant une inductance de 100 µH est placée en amont du dispositif d'émission/réception (12 ; 13).

3. Dispositif d'émission/réception (12) selon la revendication 1 ou 2, dans lequel l'unité de diagnostic (15 ; 16) est configurée pour effectuer un diagnostic dans une phase d'arbitrage (451 ; 453) dans laquelle il est déterminé lequel des postes d'utilisateur (10, 20, 30) obtiendra ensuite temporairement l'accès exclusif sans collision au bus (40) du système de bus (1).

4. Dispositif d'émission/réception (12 ; 13) selon l'une quelconque des revendications précédentes, dans lequel l'unité de diagnostic (15 ; 16) est configurée pour effectuer un diagnostic concernant une séquence de bits prédéterminée.

5. Dispositif d'émission/réception (13) selon la revendication 4, dans lequel la séquence de bits prédéterminée détermine la fin d'un message (45, 47 ; 46) à transmettre sur le bus (40).

6. Dispositif d'émission/réception (12 ; 13) selon la revendication 4 ou 5, dans lequel l'unité de diagnostic (15 ; 16) est configurée pour effectuer un diagnostic ne concernant qu'une partie de la séquence de bits prédéterminée.

7. Dispositif d'émission/réception (13) selon l'une quelconque des revendications 4 à 6, dans lequel la séquence de bits prédéterminée est envoyée dans une phase de communication dans laquelle plusieurs postes d'utilisateur (10, 20, 30) émettent en même temps.

8. Dispositif d'émission/réception (12 ; 13) selon l'une quelconque des revendications précédentes, dans lequel
le récepteur (122) présente un comparateur de réception (1221) pour recevoir les signaux de bus (CAN_H, CAN_L),
un bloc de détection de phases de communication (1225) est connecté en parallèle aux entrées du comparateur de réception (1221), et
le bloc de détection de phases de communication (1225) est configuré pour détecter la phase de communication actuelle du signal de bus (CAN_H, CAN_L), et
l'unité de diagnostic (15, 16) est configurée pour activer ou désactiver son diagnostic en fonction du résultat de détection du bloc de détection de phase de communication (1225).

9. Système de bus (1), comprenant
un bus (40), et
au moins deux postes d'utilisateur (10 ; 20 ; 30) qui sont reliés les uns aux autres par l'intermédiaire du bus (40) de telle sorte qu'ils peuvent communiquer entre eux,
au moins l'un des au moins deux postes d'utilisateur (10 ; 20 ; 30) présentant un dispositif d'émission/réception (12) selon l'une quelconque des revendications précédentes.

10. Procédé permettant d'identifier un court-circuit avec un dispositif d'émission/réception CAN (12 ; 13), le procédé étant effectué par un dispositif d'émission/réception (12 ; 13) pour un système de bus (1) dans lequel un accès exclusif sans collision d'un poste d'utilisateur (10, 20, 30) à un bus (40) du système de bus (1) est assuré au moins temporairement, le dispositif d'émission/réception (12 ; 13) présentant un émetteur (121), un récepteur (122) et une unité de diagnostic (15 ; 16), le procédé présentant les étapes consistant à
émettre, par l'émetteur (121), un signal d'émission (TxD) à un premier fil de bus (41) du bus (40),
émettre le signal d'émission (TxD) à un deuxième fil de bus (42) du bus (40),
recevoir, par le récepteur (122), le signal de bus (CAN_H, CAN_L) transmis sur les fils de bus (41, 42), et
effectuer un diagnostic, par l'unité de diagnostic (15 ; 16), uniquement dans une phase de communication prédéterminée du signal de bus (CAN_H, CAN_L) afin d'identifier un court-circuit dans le système de bus (1),
**caractérisé en ce que** le diagnostic est effectué dans une phase de communication du signal de bus (CAN_H, CAN_L) dans laquelle le taux de transmission du signal de bus (CAN_H, CAN_L) est inférieur à celui dans une autre phase de communication du signal de bus (CAN_H, CAN_L).
